# EUROPEAN PATENT SPECIFICATION

(11) **EP 1 082 019 B1**
(45) Date of publication and mention of the grant of the patent: **22.12.2004**
(21) Application number: 00903418.2
(22) Date of filing: 26.01.2000
(51) Int. Cl.: A22C 11/02

(54) **METHOD AND MEANS FOR FILLING NATURAL CASING SAUSAGES**
VERFAHREN UND VORRICHTUNG ZUM FÜLLEN VON NATURDARMWÜRSTEN
PROCEDE ET DISPOSITIF D'ENTONNAGE DE BOYAUX DE SAUCISSES

(30) Priority: 05.04.1999 US 127770 P
(43) Date of publication of application: 14.03.2001
(60) Divisional application: 03025947.7
(73) Proprietor: TOWNSEND ENGINEERING COMPANY, Des Moines, IA 50317 (US)
(72) Inventor: CATE, Stephen, H., Des Moines, IA 50317 (US); OTTOW, Marcellinus, Franciscus, Des Moines, IA 50317 (US); HERGOTT, Steven, P., Des Moines, IA 50317 (US); BASILE, Vincent, L., II, Des Moines, IA 50317 (US); SIMPSON, Michael, S., Des Moines, IA 50317 (US); HAMBLIN, David, S., Des Moines, IA 50317 (US); LEBSACK, Ken, L., Des Moines, IA 50317 (US); ENKLAAR, Rudolph, P., T., Des Moines, IA 50317 (US); THOMAS, Jay, D., Des Moines, IA 50317 (US)
(74) Representative: Thomson, Paul Anthony
(86) International application number: PCT/US2000/002028
(87) International publication number: WO 2000/059310

(56) References cited:
- EP-A- 0 391 490
- EP-A- 0 885 565
- US-A- 3 672 001
- US-A- 3 952 370
- US-A- 5 087 463
- US-A- 5 813 907
- US-A- 5 830 050

## Description

### BACKGROUND OF THE INVENTION

Sausages have been traditionally made by filling the natural intestines of sheep, for example, with the sausage meat product whereupon the filled natural casing was formed into links for cooking by the consumer. In more modem times, sausages are predominantly made by introducing a meat emulsion into an artificial casing which encased the sausage material through linking and preliminary cooking whereupon the casings are peeled from the sausage before being sold to the consumer. Machines for making sausages with artificial casings have a high volume capability (up to 30,000 sausages per hour). Efforts have been made to use these high speed machines with natural casings. Such a machine is disclosed in USA 5 830 050. However, because of the nature of the natural casings including their relatively shorter length and nonuniform diameter, modem sausage encasing machines have not achieved the volume and capacity with natural casings as they do with artificial casings.

It is therefore a principal object of this invention to provide a method and machine for filling natural casings which is economical, relatively fast, and easy to accomplish as compared to previous ways of filling natural casings.

A still further object of this invention is to provide a method and a machine for filling natural casings wherein the meat pressure expands the natural casing and pushes the casing forward as the meat emulsion discharges from a conventional hollow stuffing horn.

A further object of this invention is to provide a machine and method for filling a natural casing wherein the filled casing passes through a hollow chuck with a resilient brake therein which impedes the movement of the casing from the stuffer tube and wherein the resilient brake creates a balance between the meat pushing forward on the casing and the brake holding back on the casing, all to create the desired fill or plumpness of the resulting sausage.

A still further object of this invention is to provide a flexible or resilient brake in a hollow chuck through which the filled casing moves in a rotatable twisting head which not only produces a longitudinal drag on the casing to resist forward motion thereof, but also provides a radial rotating course which helps to rotate the casing and thereupon facilitate twisting thereof as the filled sausage casing moves through the linking chains.

A still further object of this invention is to provide a follower or thrust collar on the stuffing tube upstream of the natural casing which is manually and intermittently pushed against the back side of the natural casing which provides a light force to prevent the natural casing from sticking to the tube but does not serve to move the natural casing from the tube, for this is accomplished by the momentum of the meat emulsion filling the casing. This force is insufficient to cause squeezing pressure between the follower and the twisting head.

A still further object of this invention is to provide a method and machine which will permit easy conversion of the machine from the natural casing operation to the artificial casing operation.

A still further object of the invention is to provide a casing clamp and casing hopper on a sausage making machine which can be moved away from the casing filling station at times to accommodate the natural casing mode for the machine.

A still further object of the invention is to provide a method and apparatus for filling a natural casing which has the ability to change the stuffing tube from a full stroke as with artificial casings to a partial stroke for use with natural casings.

A still further object of the invention is to provide a method and machine for filling natural casings which has a thrust collar that can be manually controlled by the operator, or an automatic follower which will duplicate the manual operation by providing a series of intermittent push and release actions to move the unshirred casing forward.

A still further object of the invention is to provide a method and machine to fill natural casings wherein water is present at various stages of the operation to keep the natural casing from becoming dehydrated and to maintain its very soft, pliable and slippery character.

A still further object of the invention is to provide a method and machine for filling natural casings which utilizes a cooling turban as a part of the rotating twister.

These and other objects will be apparent to those skilled in the art.

### SUMMARY OF THE INVENTION

A method of filling a natural hollow elongated casing with meat emulsion involves placing a natural casing on an elongated meat emulsion stuffing tube having a meat emulsion discharge end, closing an extended end of the natural casing over the discharge end of the stuffing tube so that meat emulsion exiting the discharge end will push the natural casing longitudinally by pumping meat emulsion through the stuffing tube for expansive discharge into the natural casing at a sufficient volume and velocity to provide the primary energy within the natural casing to move the natural casing forwardly off of the discharge end of the stuffing tube. The casing is extended through a hollow chuck. A resilient brake element in the chuck is extended around the casing to impede its longitudinal movement. A thrust collar is slidably mounted on the stuffing tube and is intermittently manually pushed against the casing to limit the length thereof but is insufficient to create compression pressure thereon.

An apparatus for filling meat emulsion into an elongated natural or artificial casing has (a) a casing filling station including a stuffing tube for supporting a casing to be filled with meat emulsion, (b) a casing hopper to serve as a reservoir for a plurality of shirred artificial casings mounted on the machine adjacent the casing filling station for delivery of shirred artificial casings for mounting on the stuffing tube, and (c) means on the machine for moving the casing hopper away from its position adjacent the casing filling station when natural casings are placed on a stuffing tube in the casing filling station.

### BRIEF DESCRIPTION OF THE DRAWINGS

Fig. 1 is a perspective view of a prior art sausage encasing machine which shows the general relationship of the major components of the sausage making machine of this invention;
Fig. 2 is an enlarged scale perspective view of the prior art machine of Fig. 1 taken on line 2-2 of Fig. 1;
Figs. 2A and 2B show the casing hopper of Fig. 2 in forward and rearward positions, respectively;
Fig. 3 is an enlarged scale perspective view of the machine of Fig. 2 adapted for using conventional shirred casings, as defined in claim 10,
Figs. 3A and 3B are enlarged scale perspective views of the conventional components of a sausage encasing machine after the natural casing is placed on the stuffing horn;
Fig. 4 is an enlarged scale sectional view of the chuck; and
Fig. 5 is a view similar to Fig. 5 during the casing filling process.

### DESCRIPTION OF THE PREFERRED EMBODIMENT

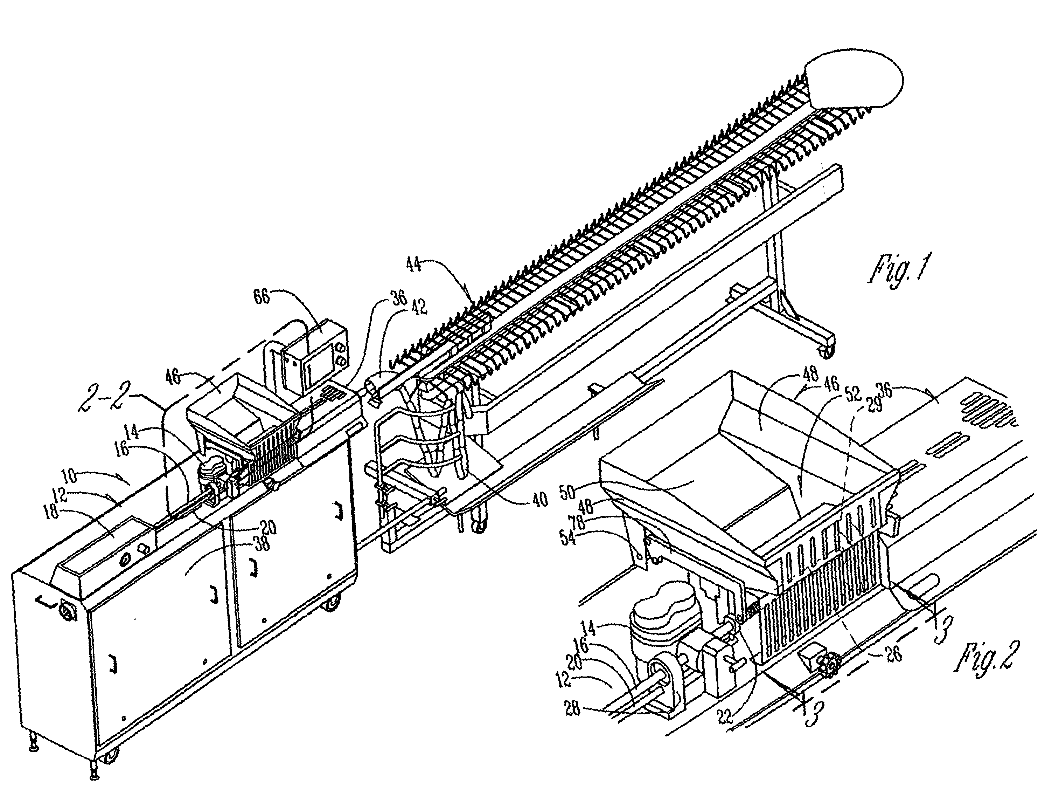

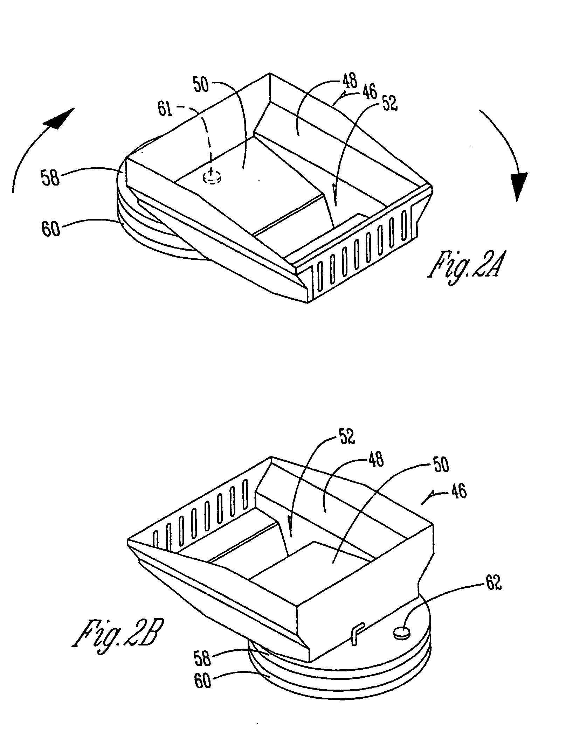

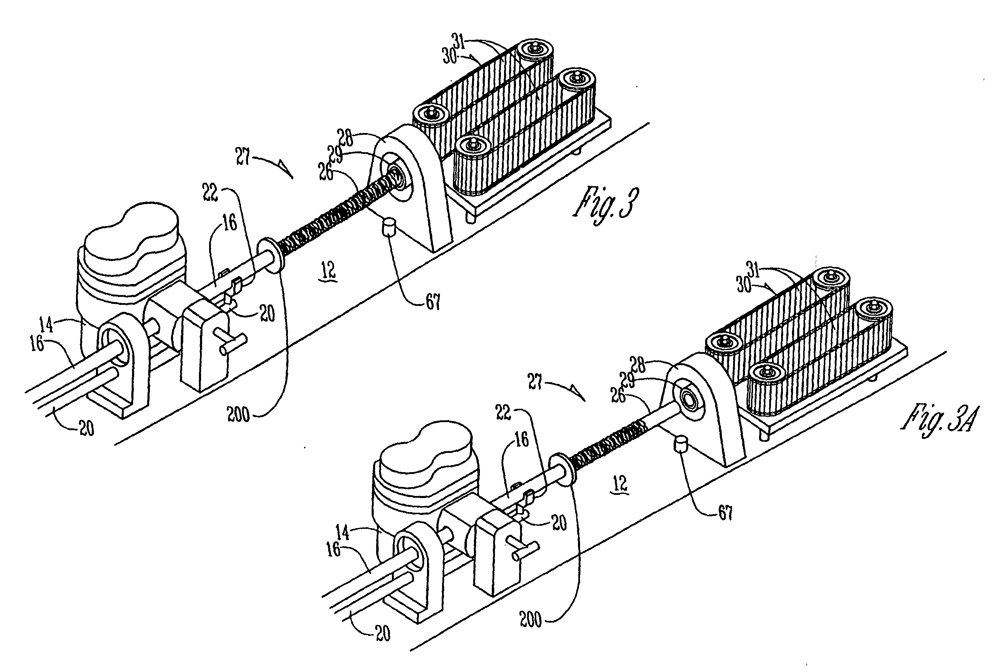

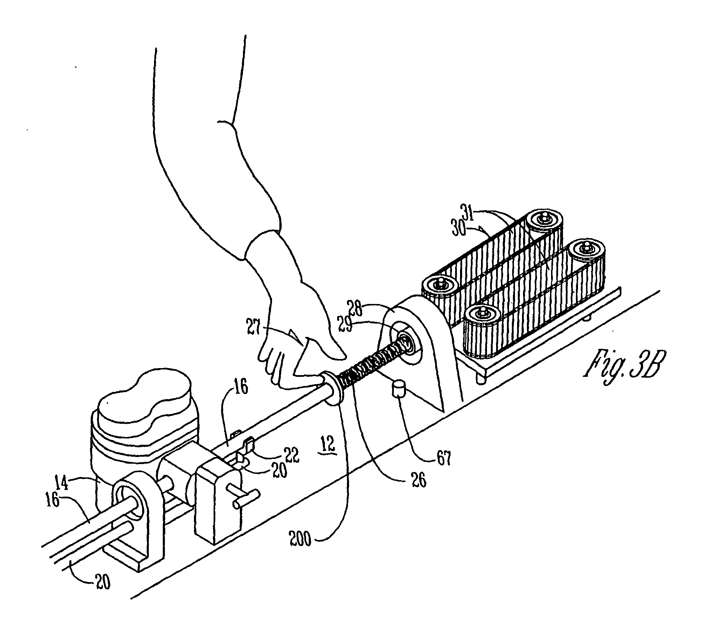

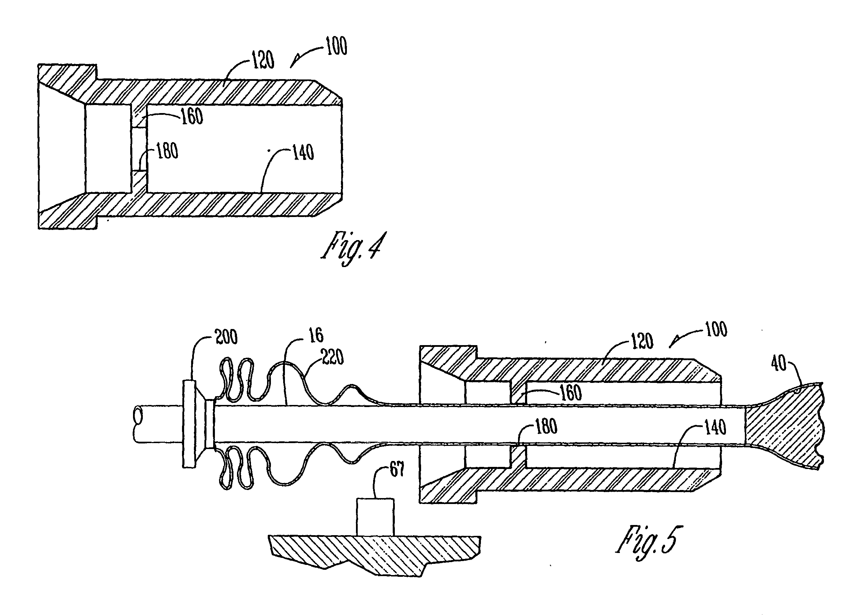

A sausage encasing machine 10 (Fig. 1) has a frame 12, and a conventional meat emulsion pump 14 connected to a source of meat emulsion. A stuffing horn 16 is slidably and operably connected to the pump 14 and is longitudinally moveable by air piston 17 contained in housing 18 (Fig. 1). A follower rod 20 is also slidably mounted on the pump 14 parallel to horn 16 and has an actuator 22 on one end slidably mounted on horn 16. Follower rod 20 is powered by air piston 24 located in housing 18. An elongated shirred sausage casing 26 is conventionally mounted on horn 16. The forward end of horn 16 conventionally terminates at casing filling station 27 (Fig. 3) adjacent twister housing 28 which has a hollow rotatable chuck 29 which receives a meat filled casing 26 and rotates it before the meat filled casing moves into conventional linker 30. (Fig. 4, 5). The chains 31 of linker 30 are rotated by a motor 34 through suitable shafts, gears or belts. The conventional chuck 120 (Figs. 4, 5) in housing 28 is rotated by a motor (not shown) through suitable shafts and gears. Linker 30 is positioned within housing 36 (Fig. 1). The foregoing components are all conventional and are well known in the art, (see U.S. Patent No. 3,115,668) and are controlled by computer control 38 (Fig. 1).

The completed strand of sausages 40 exits the machine 10 through horn 42 and the strand is deposited on the chain of hooks of conventional conveyor 44 (Fig. 1).

A casing hopper 46 has tapered sidewalls 48 and a sloping bottom 50 (Fig. 2) which cause shirred casings 26 therein to migrate downwardly towards a bottom opening 52. Hopper 46 is pivoted at 54 (Fig. 2) to any convenient side supports 56. It is also mounted on plate 58 which is pivotally mounted on plate 60 on a vertical axis of pin 61 to be rotated from the forward aperture position of Fig. 2A for filling shirred casings to an inoperative rearward position of Fig. 2B when not in use. A removable lock pin 62 extends between plates 58 and 60 to selectively lock hopper 46 in a forward or rearward position. A PLC 66 is mounted on machine 10 to program and coordinate the components of the machine. The PLC will control the pump 14, the rotation and longitudinal movement of horn 16, the position of hopper 46, and the operation of chuck 120, linker 30 and conveyor 44. A sensor or stop 67 (Figs. 3-5) adjacent the twister 28 will cause the functions at the filling station 27 to cease when the casing 220 is filled.

A rotatable chuck 100 (Figs. 5 and 6) has a cylindrical body portion 120 with a longitudinal center bore 140. A resilient brake element 160 is deposed within the center portion of bore 140. The brake 160 has a center bore 180 through which the stuffing horn 16 extends with a natural casing 220 thereon. The brake 160 provides a longitudinal drag on the natural casing as described heretofore. The location of the brake 160 in the chuck 100 can vary from one end to the other. It can be integral with the cylindrical housing 120, or can be of a separate material that is affixed in any convenient manner to the interior center bore of the chuck. The friction applied to the natural casing by the brake 160 merely impedes the free flow of the natural casing from the surface of the stuffing tube, but is insufficient to prevent the movement of the natural casing from the stuffing tube provided by the energy of the meat emulsion discharged from the stuffing tube into the interior of the natural casing.

When it is desired to change the machine 10 from filling conventional shirred casings to the filling of natural casings, the lock pin 62 is released and the hopper 46 is rotated about pin 61 from the forward position of Fig. 2B to the inoperative position of Fig. 2A so that it is out of the way for the process of filling natural casings. The thrust collar 200 is slidably mounted on the stuffing tube 16 (Figs. 3 and 4) behind the natural casing 220. The collar 200 is intermittently manually or automatically pushed against the casing insufficiently to create squeezing or compression pressure thereon but to facilitate the normal forward movement of the casing on the stuffing tube beyond the normal movement of the casing caused by the energy of the emulsion entering the casing. The longitudinal displacement of tube 16 is typically shortened by the PLC 66 when natural casings are being filled. The hopper 46 can be mechanically lifted, hinged, or moved by sliding to move out of the way to facilitate the process for filling the natural casings.

It is therefore seen that this machine will achieve at least all of its stated objectives.

## Claims

1. A method for filling a natural hollow elongated casing with a meat emulsion, comprising, placing a natural casing (220) on an elongated meat emulsion stuffing tube (16) having a meat emulsion discharge end, closing an extended end of the natural casing over the discharge end of the stuffing tube so that meat emulsion exiting the discharge end will push the natural casing (220) longitudinally by pumping meat emulsion through the stuffing tube (16) for expansive discharge into the natural casing at a sufficient volume and velocity to provide the primary energy within the natural casing to move the natural casing forwardly off of the discharge end of the stuffing tube, slidably mounting a thrust collar (200) on the stuffing tube (16) behind the natural casing, and intermittently pushing the thrust collar against the casing insufficiently to create squeezing or compression pressure thereon but to facilitate the normal forward movement of the casing on the stuffing tube beyond the normal movement of the casing caused by the energy of the emulsion entering the casing.

2. The method of claim 1 wherein water is applied to the natural casing (220) before placing the casing on the stuffing tube (16) to make the casing hydrated, soft, pliable and slippery to prevent adhesion of the casing to the stuffing tube.

3. The method of claim 1 wherein the forward end of the stuffing tube extends through a hollow chuck (100), placing a resilient brake (160) element in the chuck around the stuffing tube to yieldingly engage the natural casing to impede the longitudinal movement of the natural casing on the stuffing tube (16).

4. The method of claim 1 wherein a rotatable linking assembly (30) is located downstream of the discharge end of the stuffing tube (16) to link the natural casing filled with meat emulsion and to impede the longitudinal movement of natural casing from the stuffing tube.

5. The method of claim 1 wherein a meat pump is employed to pump meat emulsion through a stuffing tube (16), wherein the forward end of the stuffing tube extends through a hollow chuck (100) , placing a resilient brake element (160) in the chuck around the stuffing tube to yieldingly engage the natural casing to impede the longitudinal movement of the natural casing on the stuffing tube, wherein a rotatable linking assembly (30) is located downstream of the discharge end of the stuffing tube to link the natural casing filled with the meat emulsion and to impede the longitudinal movement of natural casing from the stuffing tube.

6. The method of claim 1 wherein the thrust collar (200) is intermittently manually pushed against the casing.

7. The method of claim 1, further comprising, providing a casing filling station (27) including the stuffing tube for supporting the casing to be filled with meat emulsion, providing a casing hopper (46) adjacent the casing filling station to serve as a reservoir for a plurality of shirred artificial casings for delivery of shirred artificial casings for mounting on the stuffing tube (16), and moving the casing hopper away from its position adjacent the casing filling station when natural casings are placed on a stuffing tube in the casing filling station.

8. The method of claim 7 wherein a PLC is provided and senses when the casing hopper is in its position adjacent the casing filling station (27) to thereupon control the longitudinal movement of the stuffing tube (16), to maintain the stuffing tube in a non-automatic extensibn mode, to hold a follower (20) connected to the stuffing tube in a retracted position, and to maintain the casing hopper in its position adjacent the casing filling station.

9. The method of claim 8 wherein a natural casing is placed on the stuffing tube (16) with the stuffing tube being in a partially retracted position to locate a discharge end of the stuffing tube upstream of the casing filing station (27); actuating the PLC (66) to cause the stuffing tube to extend through a chuck (29), and to cause a meat pump (14) to start pumping meat through the stuffing tube when the position of the stuffing tube through the chuck is sensed, and to start the rotation of the chuck and the stuffing tube (16), and to start the operation of linking chains (31) and a conveyor located downstream from the casing filling station (27); manually advancing the follower (20) and sensing its arrival at a position adjacent a twister mechanism containing the chuck, and causing the PLC (66) to stop the operation of the casing filling station.

10. A sausage machine for filling meat emulsion into elongated natural casing, comprising, a casing station (27) including a stuffing tube (16) for supporting a casing to be filled with meat emulsion, a thrust collar (200) slidably mounted on the stuffing tube (16) behind the casing, and means for intermittently pushing the casing longitudinally on the stuffing tube (16) insufficient to create squeezing or compression pressures thereon but to facilitate the normal forward movement of the casing on the stuffing tube (16) beyond the normal movement of the casing caused by the energy of the emulsion entering the casing

## Patentansprüche

1. Methode zur Füllung einer natürlichen, hohlen und länglicher Hülle mit einer Fleischemulsion, umfassend ein Platzieren einer natürlichen Hülle (220) auf einem länglichen Fleischsemulsionsfüllrohr (16) mit einem Fleischemulsionsausstoßende, ein Abschließen eines verlängerten Endes der natürlichen Hülle über dem Ausstoßende des Füllrohres, so dass Fleischemulsion, die das Ausstoßende verlässt, die natürliche Hülle (220) longitudinal drücken wird, durch Pumpen von Fleischemulsion durch das Füllrohr (16) zum expansiven Ausfluss in die natürliche Hülle mit geeignetem Volumen und Geschwindigkeit, zur Bereitstellung der primären Energie innerhalb der natürlichen Hülle, zur Bewegung der natürlichen Hülle vorwärts weg von dem Ausstoßende des Füllrohres, weiterhin umfassend einen verschiebbar gehalterten Druckring (200) auf dem Füllrohr (16) hinter der natürlichen Hülle, wobei der Druckring intermittierend gegen die Hülle gedrückt wird, unzureichend um Abquetschdruck oder Kompressionsdruck hierauf auszuwirken, aber geeignet zur Unterstützung der normalen Vorwärtsbewegung der Hülle auf dem Füllrohr, jenseits der normalen Bewegung der Hülle, die durch die Energie der in die Hülle eingegebenen Emulsion bewirkt wird.

2. Methode nach Anspruch 1, wobei Wasser der natürlichen Hülle (220) zugeführt wird, bevor die Hülle auf dem Füllrohr (16) platziert wird, um die Hülle zu bewässern, weich, biegbar und rutschig zu machen, um ein Verkleben der Hülle und des Füllrohres zu verhindern.

3. Methode nach Anspruch 1, wobei sich das vordere Ende des Füllrohres durch eine hohle Spannvorrichtung (100) erstreckt, wobei ein elastisches Bremselement (160) in der Spannvorrichtung um das Füllrohr platziert wird, zur ergiebigen Umschließung der natürlichen Hülle, zur Behinderung der longitudinalen Bewegung der natürlichen Hülle auf dem Füllrohr (16).

4. Methode nach Anspruch 1, wobei eine drehbare Verbindungsanordnung (30) stromabwärts des Ausstoßendes des Füllrohres (16) angeordnet ist, zum Anschließen der natürliche Hülle, welche mit Fleischemulsion gefüllt ist und zur Behinderung der longitudinalen Bewegung der natürlichen Hülle von dem Füllrohr.

5. Methode gemäß Anspruch 1, wobei eine Fleischpumpe vorgesehen ist, zum Pumpen von Fleischemulsion durch das Füllrohr (16), wobei sich das vordere Ende des Füllrohres durch eine hohle Spannvorrichtung (100) erstreckt, wobei ein elastisches Bremselement (160) in der Spannvorrichtung um das Füllrohr platziert wird, zur ergiebigen Umschließung der natürlichen Hülle, zur Behinderung der longitudinalen Bewegung der natürlichen Hülle auf dem Füllrohr, wobei eine drehbare Verbindungsanordnung (30) stromabwärts des Ausstoßendes des Füllrohres angeordnet ist, zum Anschluss der mit Fleischemulsion gefüllten natürlichen Hülle und zur Behinderung der longitudinalen Bewegung der natürlichen Hülle von dem Füllrohr.

6. Methode gemäß Anspruch 1, wobei der Druckring (200) manuell intermittierend gegen die Hülle gedrückt wird.

7. Methode gemäß Anspruch 1, weiterhin umfassend eine Bereitstellung einer Hüllenfüllstation (27), einschließend das Füllrohr zur Halterung der mit Fleischemulsion zu füllenden Hülle, die Bereitstellung eines Gehäusetrichters (46) angrenzend an die Hüllenfüllstation dienend als ein Reservoir für eine Vielzahl künstlicher elastischer Hüllen, zur Zuführung elastischer künstlicher Hüllen zur Halterung auf dem Füllrohr (16), und Bewegung des Gehäusetrichters hinweg von seiner an die Hüllenfüllstation angrenzenden Position, wenn natürliche Hüllen auf dem Füllrohr in der Hüllenfüllstation platziert werden.

8. Methode nach Anspruch 7, wobei ein PLC (programmable logic control - programmierbare Steuerung) vorgesehen ist und sensiert wenn der Gehäusetrichter sich in seiner Position in der Nähe der Hüllenfüllstation (27) befindet, um daraufhin die longitudinale Bewegung des Füllrohres (16) zu kontrollieren, zur Aufrechterhaltung des Füllrohres in einem nicht-automatischen Erweiterungsmodus, zum Halten eines Stößels (20) verbunden mit dem Füllrohr in einer eingefahrenen Position, und zum Aufrechthalten des Gehäusetrichters in seiner Position nahe der Hüllenfüllstation.

9. Methode nach Anspruch 8, wobei eine natürliche Hülle auf dem Füllrohr (16) platziert ist, mit dem Füllrohr in einer teilweise eingefahrenen Position zur Lokalisierung eines Ausstoßendes des Füllrohres stromaufwärts der Hüllenfüllstation (27); Betätigung des PLC (66) um zu bewirken, dass sich das Füllrohr durch eine Spannvorrichtung (29) erstreckt und zu bewirken, dass eine Fleischpumpe (14) startet Fleisch durch das Füllrohr zu pumpen wenn die Position des Füllrohres durch die Spannvorrichtung sensiert wird, und zum Starten der Drehung der Spannvorrichtung und des Füllrohres (16), und zum Starten des Betriebes von Verbindungsketten (31) und eines Fördermittels welches stromabwärts von der Hüllenfüllstation (27) angeordnet ist; wobei manuelles Vorschieben des Stößels (20) und Sensieren seines Eintreffens in einer Position in der Nähe eines Drehmechanismus umfassend die Spannvorrichtung, wodurch der PLC (66) den Betrieb der Hüllenfüllstation stoppt.

10. Eine Wurstmaschine zur Füllung einer Fleischemulsion in gestreckte natürliche Hüllen, umfassend eine Hüllenstation (27) einschließend ein Füllrohr (16) zur Unterstützung einer Hülle die mit Fleischemulsion gefüllt werden soll, einem Druckring (200), der verschiebbar auf dem Füllrohr (16) hinter der Hülle aufgenommen ist, und Mittel zum intermittierenden Drücken der Hülle in Längsrichtung auf dem Füllrohr (16), unzureichend um Abquetschdruck oder Kompressionsdruck hierauf auszuwirken, aber geeignet die normale Vorwärtsbewegung der Hülle auf dem Füllrohr (16) zu unterstützen, jenseits der normalen Bewegung der Hülle, bewirkt durch die Energie der in die Hülle eingegebenen Emulsion.

## Revendications

1. Procédé de remplissage d'un boyau naturel creux et long avec une émulsion de viande, comprenant la mise en place d'un boyau naturel (220) sur un tube long d'embossage (16) avec une émulsion de viande ayant une extrémité de décharge de l'émulsion de viande, la fermeture d'une extrémité allongée du boyau naturel sur l'extrémité de décharge du tube d'embossage de telle sorte que l'émulsion de viande sortant de l'extrémité de décharge pousse le boyau naturel (220) longitudinalement par le pompage et l'envoi de l'émulsion de viande dans le tube d'embossage (16) pour une décharge avec expansion dans le boyau naturel avec un volume et une vitesse suffisants pour impartir l'énergie primaire à l'intérieur du boyau naturel pour déplacer le boyau naturel vers l'avant hors de l'extrémité de décharge du tube d'embossage, le montage de manière coulissante d'un collier de poussée (200) sur le tube d'embossage (16) derrière le boyau naturel, et la poussée intermittente du collier de poussée contre le boyau de manière insuffisante pour créer un tassement ou une pression de compression sur celui-ci, mais pour faciliter le mouvement normal du boyau vers l'avant sur le tube d'embossage au-delà du mouvement normal du boyau provoqué par l'énergie de l'émulsion entrant dans le boyau.

2. Procédé selon la revendication 1, dans lequel de l'eau est appliquée au boyau naturel (220) avant sa mise en place sur le tube d'embossage (16) afin d'hydrater le boyau et le rendre souple, pliable et glissant pour empêcher l'adhérence du boyau au tube d'embossage.

3. Procédé selon la revendication 1, dans lequel l'extrémité avant du tube d'embossage s'avance dans un mandrin creux (100), plaçant un élément de frein souple (160) dans le mandrin autour du tube d'embossage pour engager élastiquement le boyau naturel afin d'entraver le déplacement longitudinal du boyau naturel sur le tube d'embossage (16).

4. Procédé selon la revendication 1, dans lequel une unité rotative (30) de transformation en chapelet de saucisses est située en aval de l'extrémité de décharge du tube d'embossage (16) pour transformer en chapelet de saucisses le boyau naturel rempli de l'émulsion de viande et pour entraver le déplacement longitudinal du boyau naturel du tube d'embossage.

5. Procédé selon la revendication 1, dans lequel une pompe à viande est utilisée pour pomper l'émulsion de viande et l'envoyer dans un tube d'embossage (16), dans lequel l'extrémité avant du tube d'embossage s'avance dans un mandrin creux (100), plaçant un élément de frein souple (160) dans le mandrin autour du tube d'embossage pour engager élastiquement le boyau naturel afin d'entraver le déplacement longitudinal du boyau naturel sur le tube d'embossage, dans lequel une unité rotative (30) de transformation en chapelet de saucisses est située en aval de l'extrémité de décharge du tube d'embossage pour transformer en chapelet de saucisses le boyau naturel rempli de l'émulsion de viande et pour entraver le déplacement longitudinal du boyau naturel du tube d'embossage.

6. Procédé selon la revendication 1, dans lequel le collier de poussée (200) est poussé manuellement de manière intermittente contre le boyau.

7. Procédé selon la revendication 1, comprenant de plus la fourniture d'un poste (27) de remplissage du boyau comprenant le tube d'embossage pour recevoir le boyau à remplir de l'émulsion de viande, la fourniture d'une trémie (46) à boyaux adjacente au poste de remplissage du boyau destinée à servir de réservoir à une pluralité de boyaux artificiels froncés pour la fourniture de boyaux artificiels froncés pour leur montage sur le tube d'embossage (16), et l'éloignement de la trémie à boyaux de sa position adjacente au poste de remplissage du boyau lorsque des boyaux naturels sont placés sur un tube d'embossage dans le poste de remplissage du boyau.

8. Procédé selon la revendication 7, dans lequel une unité logique programmable PLC est prévue et détecte le moment où la trémie à boyaux est dans sa position adjacente au poste (27) de remplissage du boyau pour ainsi contrôler le déplacement longitudinal du tube d'embossage (16), pour maintenir le tube d'embossage dans un mode d'extension non automatique, pour retenir un suiveur (20) relié au tube d'embossage dans une position rétractée, et pour maintenir la trémie à boyaux dans sa position adjacente au poste de remplissage du boyau.

9. Procédé selon la revendication 8, dans lequel un boyau naturel est placé sur le tube d'embossage (16), le tube d'embossage étant dans une position partiellement rétractée pour positionner une extrémité de décharge du tube d'embossage en amont du poste (27) de remplissage du boyau ; la PLC (66) est activée pour faire s'avancer le tube d'embossage dans un mandrin (29), et pour amener une pompe (14) à viande à commencer d'aspirer de la viande par le tube d'embossage lorsque la position du tube d'embossage dans le mandrin est détectée, et pour démarrer la rotation du mandrin et du tube d'embossage (16), et pour lancer le fonctionnement de chaînes (31) de transformation en chapelet de saucisses et un transporteur situé en aval du poste (27) de remplissage du boyau ; le suiveur (20) est avancé manuellement et son arrivée dans une position adjacente à un mécanisme torsadeur contenant le mandrin est détectée, et l'on provoque l'arrêt par la PLC (66) du fonctionnement du poste de remplissage du boyau.

10. Machine à fabriquer les saucisses destinée au remplissage d'une émulsion de viande dans un boyau naturel long, comprenant un poste (27) pour les boyaux comprenant un tube d'embossage (16) destiné à recevoir un boyau à remplir avec l'émulsion de viande, un collier de poussée (200) monté coulissant sur le tube d'embossage (16) derrière le boyau, et des moyens pour pousser longitudinalement de manière intermittente le boyau sur le tube d'embossage (16) de manière insuffisante pour créer un tassement ou des pressions de compression sur celui-ci, mais pour faciliter le mouvement normal du boyau vers l'avant sur le tube d'embossage (16) au-delà du déplacement normal du boyau provoqué par l'énergie de l'émulsion entrant dans le boyau.
